# FASCICULE DE BREVET EUROPEEN

(11) **EP 3 058 719 B1**
(45) Date de publication et mention de la délivrance du brevet: **04.04.2018**
(21) Numéro de dépôt: 14781918.9
(22) Date de dépôt: 10.10.2014
(51) Int. Cl.: H04N 5/376

(54) **CAPTEUR D'IMAGE AVEC GÉNÉRATION DE SÉQUENCES DE SIGNAUX DE COMMANDE**
BILDSENSOR MIT ERZEUGUNG VON STEUERSIGNALSEQUENZEN
IMAGE SENSOR WITH GENERATION OF CONTROL SIGNAL SEQUENCES

(30) Priorité: 16.10.2013 FR 1360062
(43) Date de publication de la demande: 24.08.2016
(73) Titulaire: Teledyne e2v Semiconductors SAS, 38120 Saint-Egrève (FR)
(72) Inventeur: DIASPARRA, Bruno, 38180 Seyssins (FR)
(74) Mandataire: Desvignes, Agnès
(86) Numéro de dépôt international: PCT/EP2014/071785
(87) Numéro de publication internationale: WO 2015/055538

(56) Documents cités:
- EP-A1- 1 079 614
- US-A1- 2004 019 817
- US-A1- 2007 146 523
- US-A1- 2012 206 633

## Description

L'invention concerne les capteurs d'image et plus particulièrement les capteurs à matrice de pixels actifs.

Un capteur d'image comprend en général une matrice de lignes et colonnes de pixels dans lesquels chaque pixel comporte un élément sensible à la lumière (en général une photodiode) et plusieurs transistors ou grilles de commande qui ont des fonctions différentes telles que par exemple la sélection du pixel en vue de la lecture du signal produit par ce pixel, la réinitialisation d'un noeud de stockage de charges à chaque période d'intégration, la réinitialisation éventuelle de la photodiode, le transfert de charges de la photodiode vers le noeud de stockage à la fin d'une durée d'intégration.

Les pixels reçoivent donc différents signaux de commande selon une séquence temporelle bien précise pour chaque signal en relation avec les autres signaux. La séquence temporelle se répète périodiquement selon un cycle de trame qui permet de lire l'information de niveau de lumière engendrée dans chacun des pixels de la matrice au cours de ce cycle.

Les signaux issus des pixels sont en général lus ligne par ligne, les pixels d'une ligne étant sélectionnés tous en même temps par un conducteur de sélection de ligne. La sélection d'un pixel appartenant à cette ligne et à une colonne déterminée reporte sur un conducteur de colonne commun à tous les pixels de la même colonne un niveau de signal électrique engendré par la lumière dans ce pixel. Des circuits de lecture, en pied de colonne, permettent de lire en parallèle les niveaux reçus par les conducteurs de colonne. Les lignes de pixels sont adressées successivement pour être lues les unes après les autres par ces circuits de lecture. Les signaux de commande de ces circuits de lecture sont synchronisés avec les signaux de commande des pixels, par exemple pour échantillonner un niveau de tension sur le conducteur de colonne après une phase de réinitialisation d'un noeud de stockage de charges ou après une phase de transfert de charges de la photodiode vers le noeud de stockage. L'élaboration de ces signaux de commande des circuits de lecture obéit donc à des règles semblables à l'élaboration des signaux de commande internes des pixels.

On s'intéresse ici à l'élaboration des signaux de commande des pixels et/ou des circuits de lecture.

Un capteur d'image peut fonctionner selon au moins deux modes différents qui sont respectivement
- un mode dit "Global Shutter", expression anglaise signifiant obturateur global, dans lequel l'instant de début d'intégration de charges engendrées par la lumière est le même pour tous les pixels et l'instant de fin d'intégration de charges après une durée d'intégration Ti (éventuellement réglable) est également le même pour tous les pixels.
- un mode dit "Electronic Rolling Shutter" ou ERS, expression anglaise signifiant obturateur électronique défilant, dans lequel l'instant de début d'intégration est défini pour chaque ligne et est décalé d'une ligne à la suivante, la durée d'intégration Ti est la même pour toutes les lignes, et l'instant de fin d'intégration est donc décalé d'une ligne à la suivante.

On souhaite parfois qu'un même capteur puisse fonctionner selon les deux modes ci-dessus, voire même selon d'autres modes, et dans chaque mode avec des variantes de séquencement des signaux. Il faut pouvoir élaborer le plus facilement possible différentes possibilités de séquencement des signaux de commande des pixels et des circuits de lecture.

Dans les capteurs actuels, les signaux de commande du pixel et les signaux de commande des circuits de lecture en pied de colonne sont établis au moyen de circuits de séquencement propres à chaque signal. Des registres définissent pour chaque signal ou portion de signal un instant de début et une durée ou un instant de fin, exprimés en référence à un comptage de nombre de coups d'horloge d'une horloge de référence. L'instant de début pour les signaux liés à la lecture d'une ligne peut être défini par rapport à un instant zéro défini par un séquenceur de ligne qui définit un cycle périodique de ligne. Ces registres commandent une machine d'état qui produit les différents signaux appliqués à la matrice de pixels et aux circuits de lecture en pied de colonne.

Pour certains signaux de commande, deux registres par signal peuvent suffire, contenant respectivement un instant de début et un instant de fin ou une durée d'un niveau actif du signal. Pour d'autres signaux, par exemple ceux qui comportent plusieurs impulsions au niveau actif au cours d'un même cycle, un nombre de registres plus grand, par exemple quatre ou cinq registres, peut être nécessaire.

Au total, pour créer les différents signaux nécessaires à la lecture des pixels, il faut prévoir dans le capteur plusieurs dizaines de registres qui doivent être programmés individuellement.

Pour faciliter la programmation des signaux nécessaires au fonctionnement du capteur et notamment au fonctionnement des pixels et des circuits de lecture, et pour faciliter la conception de capteurs aptes à fonctionner selon différents modes, l'invention propose un capteur d'image selon la revendication 1. Le contrôleur de mémoire comprend deux modes de fonctionnement qui sont respectivement un mode d'utilisation, pour établir les signaux de commande lors du fonctionnement du capteur, et un mode de programmation pour inscrire dans la mémoire les mots binaires correspondant aux signaux de commande à établir. Le capteur comporte un circuit d'interface de programmation apte à établir une communication entre un processeur extérieur au capteur et le contrôleur de mémoire pour effectuer la programmation désirée à partir de l'extérieur du capteur.

Le capteur comporte en outre de préférence un circuit de commande de synchronisation, établissant un instant de démarrage de la série de signaux de commande en relation avec le fonctionnement global de la matrice de pixels, et notamment en relation avec la cadence de lecture des lignes de la matrice. Ce circuit peut établir des instants de démarrage d'une série de signaux de commande, par exemple en début d'un cycle d'intégration de charges dans une ligne de pixels, ou au début d'un cycle de lecture proprement dite commençant par une réinitialisation d'un noeud mémoire du pixel, etc. Le circuit de synchronisation peut établir un instant de démarrage périodique qui se renouvelle pour chaque ligne de pixels. Le circuit de synchronisation détermine également quelle est la série de signaux de commande à établir à un moment donné, le circuit de séquencement étant de préférence apte à élaborer différentes séries de signaux de commande.

La mémoire peut comporter plusieurs zones, chaque zone correspondant à un ensemble respectif de signaux de commande à établir, et le circuit de séquencement comporte un registre programmable dans lequel sont inscrites, pour chaque ensemble, une information de début de zone de mémoire à utiliser et une information de nombre d'adresses successives à utiliser pour cette zone. Selon l'ensemble de signaux de commande à engendrer, et sous la commande du circuit de synchronisation, le contrôleur de mémoire transmet à la mémoire, à la fréquence de l'horloge de référence, la succession d'adresses qui est à utiliser.

Enfin, on pourra prévoir que le circuit de séquencement comprend plusieurs mémoires programmables ayant chacune un contrôleur associé et un circuit de génération de signaux de commande associé. Chacun de ces ensembles est dédié à une série respective de plusieurs signaux de commande (ou à un ensemble de séries de plusieurs signaux de commande). Un multiplexeur permet de diriger vers les lignes de commande respectives du capteur les signaux élaborés par les différents circuits de génération, étant donné que les différentes séries peuvent être destinées en partie aux mêmes lignes de commande de la matrice de pixels ou des circuits de lecture.

Dans la publication de brevet US2007/0146523, il est décrit un générateur de signal qui comporte une mémoire de données définissant les niveaux de signaux de commande souhaités et une mémoire d'instants de transition définissant les moments auxquels on doit extraire de la mémoire de données un nouveau mot représentant les niveaux des signaux de commande.

D'autres caractéristiques et avantages de l'invention apparaîtront à la lecture de la description détaillée qui suit et qui est faite en référence aux dessins annexés dans lesquels :
- la figure 1 représente un circuit de séquencement selon l'invention, incorporé à un capteur d'image,
- la figure 2 représente un exemple de séquence de signaux de commande, comprenant une série de six signaux de commande ;
- la figure 3 représente la décomposition de ces signaux en valeurs logiques à la cadence de la fréquence d'horloge sur une durée de 42 coups d'horloge ;
- la figure 4 représente le contenu de la mémoire programmable permettant d'établir la séquence de signaux ;
- la figure 5 représente une architecture avec plusieurs mémoires programmables et plusieurs circuits d'élaboration de signaux de commande, les signaux de commande étant multiplexés avant d'être appliqués à la matrice de pixels.

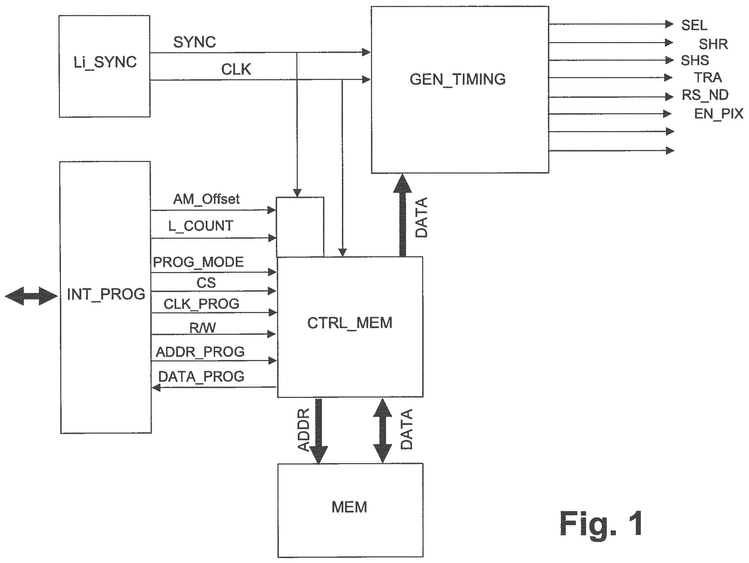

Sur la figure 1, on n'a pas représenté la matrice de pixels du capteur d'image ni les circuits de lecture qui permettent de recueillir les signaux engendrés par les pixels sous l'effet de la lumière et de convertir ces signaux en numérique. On a seulement représenté le principe du circuit de séquencement selon l'invention, qui établit une série de signaux de commande destinés à la matrice de pixels et/ou destinés aux circuits de lecture au pied de chaque colonne de pixels.

Le circuit de séquencement comprend les éléments principaux suivants :
- une mémoire MEM adressable et programmable,
- un contrôleur de mémoire CTRL_MEM qui contrôle cette mémoire pour y inscrire des données et en extraire des données,
- un circuit de génération GEN_TIMING d'une série de signaux de commande, utilisant les données extraites de la mémoire à fréquence constante ;
- un circuit INT_PROG d'interface de programmation, permettant de commander le contrôleur de mémoire pour programmer le contenu de la mémoire.

Un circuit de synchronisation Li_SYNC gère la synchronisation du circuit de séquencement par rapport au fonctionnement général du capteur, afin que les signaux de commande engendrés par le circuit de séquencement soient mis en correspondance avec la cadence de fonctionnement général du capteur. Le circuit de synchronisation envoie des signaux de synchronisation SYNC, et notamment une impulsion définissant l'instant où une série de signaux de commande doit commencer à être produite. Ce circuit Li_SYNC peut faire partie d'un séquenceur général du capteur qui établit plus globalement le fonctionnement de la matrice de pixels, par exemple un séquenceur qui définit la période de trame, le temps d'intégration, la période de ligne, etc.

La mémoire MEM est une mémoire dynamique adressable RAM comportant des mots dont le nombre de bits (par exemple 10 ou 16) définit le nombre maximal de signaux de commande qui peuvent être élaborés simultanément. Le nombre de mots dans la mémoire est lié à la longueur des signaux de commande qui peuvent être élaborés, soit simultanément, soit séparément. La mémoire peut comprendre plusieurs zones, chaque zone correspondant à une série de signaux de commande donnée.

Le contrôleur de mémoire CTRL_MEM fonctionne selon deux modes : programmation et utilisation. En mode de programmation (signal PROG_MODE actif), il est apte à fournir à la mémoire des adresses et les données à inscrire à ces adresses. En mode d'utilisation, il est apte à fournir à la mémoire, à une cadence d'horloge fixe donnée par une horloge de référence CLK, une série d'adresses consécutives entre une adresse de début de séquence fonctionnelle et une adresse de fin de séquence fonctionnelle (telle qu'une séquence de lecture de pixel). Il comporte à cet effet un registre programmable dans lequel sont contenus l'adresse de début AM_Offset et un nombre d'adresses L_COUNT pour une séquence donnée. Dans le cas le plus simple, si la mémoire ne stocke les données que pour une seule série de signaux de commande, l'adresse de début est la première adresse A0 de la mémoire. Dans le cas où il y a plusieurs séries de signaux à élaborer, contenues dans des zones différentes de la mémoire, le contrôleur utilise les adresses de début AM_Offset et les longueurs L_COUNT associées à la série à produire.

Le circuit d'interface de programmation INT_PROG est un circuit de communication extérieure pour faire communiquer le capteur, et plus particulièrement le circuit de contrôle CTRL_MEM avec un processeur extérieur en vue de la programmation de la mémoire MEM. Il établit les signaux nécessaires à cette programmation (horloge CLK_PROG, sélection de mémoire CS, sélection lecture/écriture R/W, signal de mode programmation PROG_MODE, adresses ADD_PROG, et données DATA_PROG à inscrire dans la mémoire ou lues dans la mémoire pour contrôler l'écriture). Le circuit d'interface enregistre aussi dans des registres les valeurs d'offset d'adresse (AM_Offset) et de longueur de séquence d'adressage L_COUNT) nécessaires au contrôleur de mémoire pour appliquer à la mémoire une suite bien déterminée d'adresse successives.

Enfin, le circuit d'élaboration de signaux de commande GEN_TIMING fonctionne en mode d'utilisation : il reçoit à une cadence régulière les données extraites de la mémoire et reçoit également les signaux d'horloge CLK et de synchronisation du circuit Li_SYNC. La succession des bits de rang 1 à la cadence d'horloge produit un premier signal de commande logique. La succession des bits de rang 2 produit un deuxième signal, et ainsi de suite. Sur la figure 1 on a représenté huit sorties de signal de commande, parmi lesquels six signaux SEL, SHR, SHS, TRA, RS_ND, EN_PIX, qui sont donnés à titre d'exemple et qui seront explicités ci-après en référence aux figures suivantes.

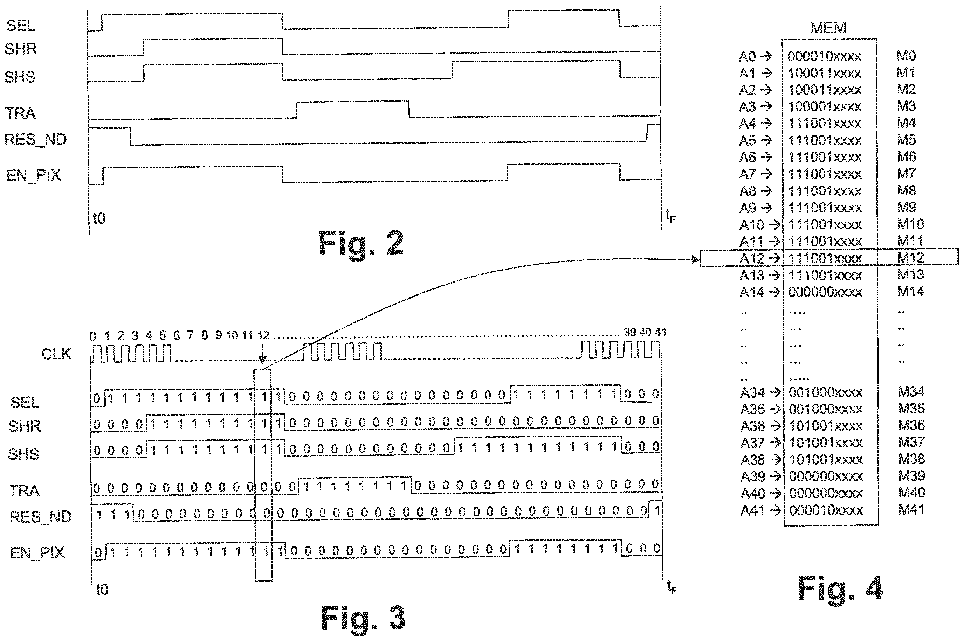

La figure 2 représente un exemple d'une série de signaux de commande qu'on veut élaborer selon l'invention à partir du contenu de la mémoire MEM ; la figure 3 représente une transposition de ces signaux sous forme d'une succession de valeurs binaires à une cadence d'horloge de référence déterminée suffisante pour bien différencier les décalages pouvant exister entre les transitions logiques de ces différents signaux ; et la figure 4 représente un tableau du contenu qu'il faut programmer dans la mémoire MEM qui va permettre d'élaborer les signaux de commande. Ces schémas ne sont donnés qu'à titre d'exemple, bien d'autres séries de signaux pouvant être élaborés sur le même principe. Cet exemple correspond de manière réaliste à une séquence de lecture classique d'une ligne de pixels. Les signaux sont actifs au niveau logique haut.

Dans cet exemple, les pixels ont une structure bien connue comportant une photodiode et un noeud de stockage des charges engendrées par la photodiode. Le pixel qui doit être lu (en pratique tous les pixels d'une même ligne simultanément) est sélectionné par un signal SEL. Ce signal SEL reporte sur un conducteur de colonne commun aux pixels d'une même colonne le potentiel du noeud de stockage, à travers un transistor suiveur faisant partie du pixel. Le conducteur de colonne est alimenté en courant sous le contrôle d'un signal EN_PIX qui autorise le passage d'un courant dans le transistor suiveur et lui permet d'exécuter sa fonction de suiveur de tension. Le noeud de stockage de charges est d'abord réinitialisé à un potentiel de référence par un signal de commande RES_ND. Le potentiel du conducteur de colonne, représentant le potentiel du noeud de stockage réinitialisé, est alors lu au moyen d'un signal de commande SHR qui est un signal de commande des circuits de lecture en pied de colonne ; puis le noeud de stockage reçoit les charges engendrées par la photodiode sous la commande d'un signal de transfert TRA et le potentiel du conducteur de colonne, représentant le potentiel du noeud de stockage ainsi rempli, est alors lu au moyen d'un signal de commande SHS (signal de commande des circuits de lecture).

Les signaux de lecture associés à cette séquence et appliqués aux circuits de lecture en pied de colonnes sont un signal SHR (pour l'échantillonnage dans les circuits de lecture des potentiels du conducteur de colonne après la phase de réinitialisation) et un signal SHS (pour l'échantillonnage dans les circuits de lecture des potentiels du conducteur de colonne après la phase de transfert de charges).

Il y a donc dans cet exemple six signaux de commande : quatre signaux de commande de pixels (SEL, EN_PIX, RES_ND, TRA) et deux signaux de commande des circuits de lecture (SHR, SHS). Dans d'autres exemples, il pourrait y avoir un nombre de signaux plus grand.

La séquence se déroule entre un instant t0 et un instant t_{F} qui définissent respectivement le début et la fin d'une séquence fonctionnelle. Certains des signaux comportent une seule impulsion au niveau actif, d'autres en comportent deux. D'autres signaux encore, non représentés, pourraient en comporter plus de deux.

La cadence d'horloge de référence choisie pour établir ces signaux est donnée par une horloge CLK dont la fréquence est suffisante pour faire apparaître clairement la différence (une période d'horloge) entre le front descendant des signaux SEL, SHR, SHS, et le front montant du signal de transfert TRA.

On définit le niveau logique bas ou haut de chacun des signaux de commande pour chaque période d'horloge (42 périodes pour la séquence globale dans l'exemple représenté).

La figure 3 représente tous les niveaux logiques de chacun des signaux pour chaque période de l'horloge CLK, numérotées de 0 à 41 entre l'instant t0 et l'instant t_{F}. Le niveau logique bas ou haut est représenté par une valeur de bit 0 ou 1. Les 42 périodes d'horloge définissent ici la durée d'une séquence fonctionnelle complète.

La figure 4 représente le contenu qu'il faut enregistrer dans la mémoire MEM pour élaborer les signaux de commande. Ce contenu est représenté sous forme d'un tableau comprenant une succession de quarante deux adresses, avec un mot mémorisé à chaque adresse. Les adresses sont numérotées A0 à A41 et correspondent chacune à une période d'horloge respective, l'ordre de succession des adresses correspond à l'ordre de succession des périodes d'horloge. Le mot mémorisé à chacune de ces adresses est désigné par M0 à M41.

Les mots binaires comportent au moins autant de bits qu'il y a de signaux de commande à élaborer dans la séquence. Ici six bits sont nécessaires, et la mémoire comporte par exemple des mots de 10 bits dont les quatre derniers restent inutilisés dans cet exemple. Le rang i du bit dans le mot est associé directement à l'un des signaux de commande à produire, qu'on appellera signal de rang i.

Ainsi, pour tous les mots, le bit de rang 1 (pris de gauche à droite) représente le premier signal de commande SEL, le bit de rang 2 représente le signal SHR, le bit de rang 3 représente le signal SHS, le bit de rang 4 représente le signal TRA, le bit de rang 5 représente le signal RES_ND, et le bit de rang 6 représente le signal EN_PIX.

On a représenté par une flèche reliant un rectangle de la figure 3 à un rectangle de la figure 4 la correspondance entre les valeurs logiques des signaux à un instant donné (ici la période d'horloge numérotée 12) et le mot stocké à une adresse de mémoire (ici A12) correspondant à cet instant. Le mot est constitué des valeurs binaires des signaux de rang i = 1 à N à une période d'horloge déterminée correspondant à l'adresse du mot.

Pour créer les signaux de commande lors de l'utilisation du capteur, on extrait de la mémoire à la cadence d'horloge CLK à partir d'un instant t0, toutes les adresses successives de A0 à A41, et on utilise les bits successifs d'un rang donné pour créer un signal logique dont le niveau varie entre une valeur haute et une valeur basse en correspondance avec la valeur des bits successifs, le signal restant constant à un niveau tant que les bits se succèdent à une même valeur logique et changeant de niveau lorsque les bits changent de valeur. On reproduit ainsi les différents signaux de la figure 2 en utilisant les bits de rang différents. Ces signaux sont créés dans le circuit d'élaboration GEN_TIMING qui reçoit les données de la mémoire à la cadence d'horloge et qui est synchronisé par des signaux SYNC en correspondance avec le fonctionnement global de la matrice de pixels.

En mode de programmation du capteur, le circuit d'interface de programmation INT_PROG émet un signal actif PROG_MODE qui indique au contrôleur que la mémoire doit être programmée. Il émet également un signal CS qui indique que c'est bien cette mémoire qui est désignée, spécialement dans le cas où il y a plusieurs mémoires. Il fournit un signal R/W indiquant si le contrôleur doit écrire ou lire dans la mémoire. Enfin, il fournit les adresses (ADDR_PROG) dans lesquelles il faut lire ou écrire et les mots (DAT_PROG) à écrire à ces adresses. L'opération de programmation, avec le signal R/W actif en écriture consiste à écrire toutes les données, puis, avec le signal R/W inactif, à relire les données pour vérifier que les données inscrites sont celles qu'on voulait. L'écriture se fait à une fréquence CLK_PROG qui peut être différente de la fréquence en lecture et différente de la fréquence de l'horloge de référence CLK en mode d'utilisation du capteur.

En mode d'utilisation du capteur, l'interface de programmation maintient une valeur inactive du signal PROG_MODE et du signal R/W et le contrôleur de mémoire ne communique qu'avec la mémoire. Il applique à la mémoire à cadence constante (horloge CLK) les adresses successives à partir de la première ou à partir d'une adresse AM_Offset programmée au préalable et jusqu'à une adresse calculée à partir de l'information de longueur de séquence (nombre de périodes d'horloge L_COUNT) également programmée au préalable.

Dans ce qui précède on a décrit en détail le fonctionnement du capteur pour une seule série de signaux de commande. Dans la pratique on a besoin d'établir plusieurs séries de signaux. On peut prévoir plusieurs mémoires, plusieurs contrôleurs de mémoire et plusieurs circuits d'élaboration de signaux, tels que ceux de la figure 1 ; le circuit de synchronisation Li_SYNC désigne en fonction des besoins celui ou ceux de ces ensembles qui doivent être utilisés à un moment donné. Le circuit de synchronisation donne des impulsions de démarrage de séquence à chaque fois au groupe de circuits concerné. Etant donné que différentes séquences peuvent être enregistrées en mémoire et étant donné que ces séquences peuvent utiliser des signaux en commun, on prévoira de multiplexer les sorties des différents circuits d'élaboration GEN-TIMING pour les signaux communs, c'est-à-dire les signaux qui doivent être appliqués à un même conducteur de commande.

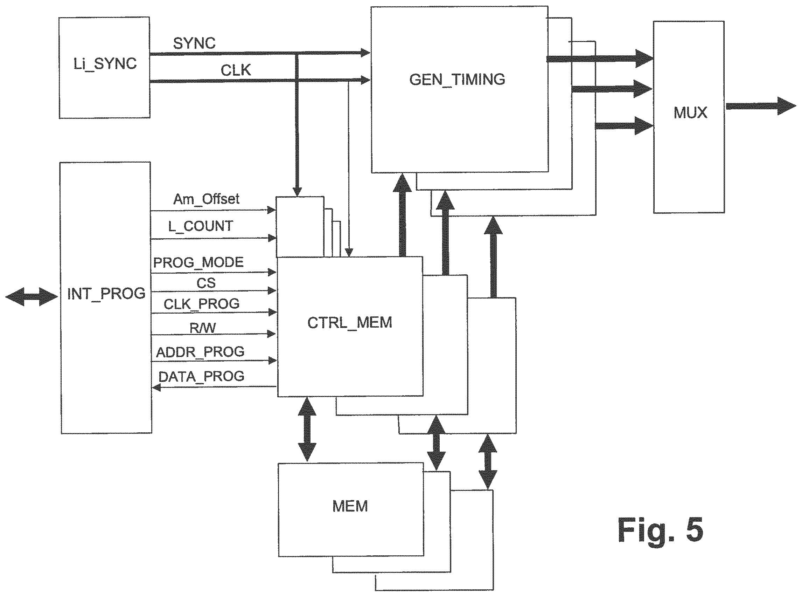

La figure 5 représente l'architecture générale du circuit d'élaboration de séquences qui en résulte.

## Revendications

1. Capteur d'image comprenant une matrice de lignes et colonnes de pixels actifs, des circuits de lecture, et un circuit de séquencement pour appliquer des signaux de commande aux pixels (SEL, RES_ND) et/ou aux circuits de lecture (SHR, SHS) selon des séquences bien déterminées, **caractérisé en ce que** le circuit de séquencement comprend :
- une mémoire adressable programmable (MEM) contenant des mots binaires (M0 M1, M2 ...) où chaque mot comprend un ensemble de plusieurs bits de rang 1 à N, et où le rang i d'un bit dans un mot correspond au rang i d'un signal de commande respectif parmi une série de signaux de commande des pixels et/ou des circuits de lecture du capteur,
- un contrôleur de mémoire (CTRL_MEM) pour extraire de la mémoire à une cadence d'horloge fixe (CLK) les mots situés à des adresses successives de la mémoire depuis une adresse de départ jusqu'à une adresse d'arrivée, qui définissent respectivement le début et la fin d'une séquence fonctionnelle du capteur,
- et un circuit (GEN_TIMING) de génération de signaux de commande établissant chaque signal de commande de rang i à partir de la succession a ladite cadence d'horloge (CLK) de bits de rang respectif i extraits de la mémoire par le contrôleur, le signal de commande ayant une première valeur ou une deuxième valeur selon la valeur du bit et changeant de valeur lorsque le bit change de valeur.

2. Capteur d'image selon la revendication 1, **caractérisé en ce que** le contrôleur de mémoire comprend deux modes de fonctionnement qui sont respectivement un mode d'utilisation, pour établir les signaux de commande lors du fonctionnement du capteur, et un mode de programmation pour inscrire dans la mémoire les mots binaires correspondant aux signaux de commande à établir.

3. Capteur d'image selon la revendication 2, **caractérisé en ce qu'**il comporte un circuit d'interface de programmation (INT_PROG) apte à établir une communication entre un processeur extérieur au capteur et le contrôleur de mémoire pour effectuer la programmation désirée à partir de l'extérieur du capteur.

4. Capteur d'image selon l'une des revendications 1 à 3, **caractérisé en ce qu'**il comporte un circuit de commande de synchronisation (Li_SYNC), établissant un instant de démarrage de la série de signaux de commande en relation avec le fonctionnement global de la matrice de pixels, et notamment en relation avec la cadence de lecture des lignes de la matrice.

5. Capteur d'image selon l'une des revendications 1 à 4, **caractérisé en ce que** la mémoire comporte plusieurs zones, chaque zone correspondant à un ensemble respectif de signaux de commande à établir, et le circuit de séquencement comprend un registre programmable dans lequel sont inscrits une information de début de zone de mémoire à utiliser et une information de nombre d'adresses successives à utiliser pour cette zone.

## Patentansprüche

1. Bildsensor, der eine Matrix von Reihen und Spalten von aktiven Pixeln, Leseschaltungen genannt, und eine Sequenzierungsschaltung zum Anlegen von Steuersignalen an die Pixel (SEL, RES_ND) und/oder an die Leseschaltungen (SHR, SHS) ganz bestimmten Sequenzen umfasst, **dadurch gekennzeichnet, dass** die Sequenzierungsschaltung Folgendes umfasst:
- einen adressierbaren programmierbaren Speicher (MEM), der binäre Wörter (M0, M1, M2 ...) enthält, wobei jedes Wort einen Satz von mehreren Bits von Rang 1 bis N umfasst, wobei Rang i eines Bits in einem Wort Rang i eines jeweiligen Steuersignals aus einer Serie von Steuersignalen der Pixel und/oder der Leseschaltungen des Sensors entspricht,
- eine Speichersteuerung (CRTL_MEM) zum Extrahieren, gemäß einer festen Taktrate (CLK), die Wörter, die sich an aufeinander folgenden Adressen des Speichers von einer Ausgangsadresse bis zu einer Ankunftsadresse befinden, die jeweils den Anfang und das Ende einer funktionellen Sequenz des Sensors definieren,
- und eine Steuersignalerzeugungsschaltung (GEN_TIMING), die jedes Steuersignal von Rang i auf der Basis der Abfolge mit der Taktrate (CLK) von durch die Steuerung aus dem Speicher extrahierten Bits jeweils von Rang i erzeugt, wobei das Steuersignal einen ersten Wert oder einen zweiten Wert gemäß dem Wert des Bits hat und den Wert ändert, wenn das Bit den Wert ändert.

2. Bildsensor nach Anspruch 1, **dadurch gekennzeichnet, dass** die Speichersteuerung zwei Betriebsmodi umfasst, die jeweils ein Nutzungsmodus zum Erzeugen der Steuersignale während des Betriebs des Sensors und ein Programmiermodus zum Registrieren der binären Wörter entsprechend den zu erzeugenden Steuersignalen in dem Speicher sind.

3. Bildsensor nach Anspruch 2, **dadurch gekennzeichnet, dass** er eine Programmierschnittstellenschaltung (INT_PROG) umfasst, die eine Kommunikation zwischen einem externen Prozessor mit dem Sensor und der Speichersteuerung einrichten kann, um die gewünschte Programmierung auf der Basis des Äußeren des Sensors zu bewirken.

4. Bildsensor nach einem der Ansprüche 1 bis 3, **dadurch gekennzeichnet, dass** er eine Synchronisationssteuerschaltung (Li_SYNC) umfasst, die einen Startzeitpunkt der Serie von Steuersignalen in Bezug zum globalen Betrieb der Pixelmatrix und insbesondere in Bezug zur Leserate der Zeilen der Matrix einrichtet.

5. Bildsensor nach einem der Ansprüche 1 bis 4, **dadurch gekennzeichnet, dass** der Speicher mehrere Zonen umfasst, wobei jede Zone einem jeweiligen Satz von zu erzeugenden Befehlssignalen entspricht, und die Sequenzierungsschaltung ein programmierbares Register umfasst, in dem eine zu benutzende Speicherzonenanfangsinformation und eine Information der Anzahl von für diese Zone zu benutzenden aufeinander folgenden Adressen registriert sind.

## Claims

1. Image sensor comprising a matrix of rows and columns of active pixels, readout circuits, and a sequencing circuit for applying control signals to the pixels (SEL, RES_ND) and/or to the readout circuits (SHR, SHS) according to clearly determined sequences, **characterized in that** the sequencing circuit comprises:
- a programmable addressable memory (MEM) containing binary words (M0 M1, M2, etc.) in which each word comprises a group of several bits of position 1 to N, and in which the position i of a bit in a word corresponds to the position i of a respective control signal from among a series of control signals for pixels and/or readout circuits of the sensor,
- a memory controller (CTRL_MEM) for extracting from the memory at a fixed clock rate the words located at successive addresses of the memory from a start address to an end address, which define respectively the beginning and the end of an operational sequence of the image sensor,
- and a control signal generation circuit (GEN_TIMING) establishing each control signal of position i from the succession at said fixed clock rate (CLK) of bits of respective position i that are extracted from the memory by the controller, the control signal having a first value or a second value according to the value of the bit and changing value when the bit changes value.

2. Image sensor according to Claim 1, **characterized in that** the memory controller comprises two operating modes which are respectively a utilization mode, to establish the control signals when the sensor is operating, and a programming mode to write into the memory the binary words corresponding to the control signals to be established.

3. Image sensor according to Claim 2, **characterized in that** it includes a programming interface circuit (INT_PROG) for establishing a communication between a processor external to the sensor and the memory controller in order to perform the desired programming from outside the sensor.

4. Image sensor according to one of Claims 1 to 3, **characterized in that** it includes a synchronization control circuit (Li_SYNC), establishing an instant of startup of the series of control signals in relation to the global operation of the pixel matrix, and notably in relation to the readout rate for the rows of the matrix.

5. Image sensor according to one of Claims 1 to 4, **characterized in that** the memory includes several areas, each area corresponding to a respective group of control signals to be established, and the sequencing circuit comprises a programmable register into which there are written an item of information indicating the start of the memory area to be used and an item of information indicating the number of successive addresses to be used for this area.
